# EUROPEAN PATENT APPLICATION

(11) **EP 3 187 244 A1**
(43) Date of publication of application: **05.07.2017**
(21) Application number: 15203139.9
(22) Date of filing: 30.12.2015
(51) Int. Cl.: B01D 53/50, B01J 20/28, B01J 20/04, B01J 20/30, B01D 53/68

(54) **COMPOSITION FOR THE PURIFICATION OF FLUE GAS**

(71) Applicant: Lhoist Recherche et Développement S.A., 1342 Ottignies-Louvain-la-Neuve (BE)
(72) Inventor: SINDRAM, Martin, 58256 Ennepetal (DE); DIETHELM, Walter, 40822 Mettmann (DE); PUST, Christopher, 40625 Düssseldorf (DE); PETTIAU, Xavier, 6010 Couillet (BE)
(74) Representative: Cohausz & Florack

(57) **Abstract**

The invention relates to a composition for the purification of flue gas containing 1 to 99 wt.% of a powder of a sodium salt of carbonic acid and 1 to 99 wt.% of a powder of an absorptive material, wherein the powder of an absorptive material has a specific pore volume that is equal to or greater than 0.1 cm³/g. The invention also relates to a process for dry flue gas purification and the use of an absorptive material to improve the flowability and/or storability and/or HF absorptivity of a sodium salt of carbonic acid.

## Description

The present invention relates to a composition for dry flue gas purification, a manufacturing process for said composition, and the use of said composition for dry flue gas purification. The invention also relates to a process for dry flue gas purification and the use of an absorptive material to improve the flowability and/or storability and/or HF absorptivity of a sodium salt of carbonic acid.

In many industrial processes, flue gases are produced. For example, in the combustion of fossil resources, for example at power plants such as coal-fired power plants, large amounts of flue gases are produced. Also in waste incineration, large amounts of flue gases are produced.

Flue gases often contain harmful or even noxious pollutants, for example sulfur oxides, such as sulfur dioxide (SO₂) or sulfur trioxide (SO₃), and/or hydrogen halides, such as hydrogen fluoride (HF) and/or hydrogen chloride (HCl).

Attempts have been made to decrease the levels of pollutants in the air. In particular, processes for the purification of flue gases have been devised to reduce the amounts of pollutants emitted for example from waste incineration plants and from power plants fired by fossil resources. These processes usually comprise bringing the flue gas into contact with an absorbent, also referred to as a sorbent.

Different processes have been devised for flue gas purification, also known as flue gas scrubbing. In wet scrubbing, the alkaline absorbent such as limestone or lime-based material is brought into contact with the flue gas usually as a slurry in water. Disadvantages of wet scrubbing include corrosion of the equipment, the need for treatment or reuse of the spent water.

In dry scrubbing, also referred to as dry flue gas purification or dry sorbent injection, the absorbent is normally brought into contact with the flue gas in the dry state. After absorption, the dry reaction products are normally collected downstream in a dedusting unit that usually has a fabric filter or an electrostatic filter. A big advantage of dry flue gas purification is the simplicity of the equipment required to implement dry flue gas purification.

Often, lime-based materials, such as hydrated lime (Ca(OH)₂), or alkali metal salts of carbonic acid, such as sodium hydrogen carbonate (NaHCO₃) or sodium sesquicarbonate such as trona (Na₂CO₃*NaHCO₃*2H₂O), are employed as absorbents in dry flue gas purification.

It has been suggested to use both sodium hydrogen carbonate and hydrated lime for flue gas purification. JP H11-165036 A describes a process for flue gas purification by simultaneously injecting sodium hydrogen carbonate and hydrated lime via two separate injection systems into the flue gas stream. The two separate injection systems, however, increase the cost for the flue gas purification system.

In addition, improved absorbents have been reported, in particular improved calcium hydroxide particles.

For example, EP 0 861 209 B1 describes calcium hydroxide particles with a total pore volume of at least 0.1 cm³/g for capturing acidic gases. The calcium hydroxide particles are prepared by slaking quicklime (Ca0) particles with a reactivity of more than 30°C/minute with enough water to obtain calcium hydroxide with a residual humidity between 15 to 30 wt.% followed by drying and grinding. The particles are reportedly more effective at capturing sulfur dioxide and hydrogen chloride, compared to standard calcium hydroxide particles.

WO 2007000433 A2 describes a powdery hydrated lime comprising up to 3.5 wt.% of an alkali metal and with a specific BET surface area of 25 m²/g or larger and a total

BJH pore volume of 0.1 cm³/g. The hydrated lime is prepared by slaking quicklime. The alkali metal is introduced into the hydrated lime by way of an alkali metal salt that is advantageously added to the slaking water for the quicklime. The hydrated lime is reportedly more effective at capturing sulfur dioxide and hydrogen chloride, compared to other hydrated lime absorbents.

Generally, in order to increase the absorptivity of absorbents, they are ground to fine powders with a small particle size. The smaller the particle size, the higher the surface area of the particle and, thus, of the absorbent, which can react with the pollutants in the flue gas. As a characteristic value for the particle size of a powder, often the so-called d₅₀ value is provided. The d₅₀ value of the particles of the powder is normally determined through the particle size distribution of the powder. The size at which 50 wt.% of the powder would pass a theoretical aperture of a sieve, as determined from the particle size distribution, is commonly referred to as the d₅₀ value. Typically, d₅₀ values of less than 40 µm, or even less than 20 µm are desired for the absorbents.

Maintaining a low d₅₀ in a powder of a sodium salt of carbonic acid is difficult, in particular for trona and for sodium hydrogen carbonate.

While a powder of a sodium salt of carbonic acid, in particular of sodium hydrogen carbonate, with a d₅₀ of less than 40 µm or even less than 20 µm can be prepared by grinding, the resulting small particle size of the fine-grained powder cannot be stored for long periods of time. Normally, after a few days or even already after one day, the particles in the powder of a sodium salt of carbonic acid, in particular of sodium hydrogen carbonate, start to reagglomerate, thereby forming larger aggregates. A powder containing larger aggregates is undesirable due to the reduced surface area. For this reason, sodium salts of carbonic acid, in particular sodium hydrogen carbonate, are normally ground on-site immediately before use. This makes the presence of mills for the sodium salt of carbonic acid necessary, which increase the cost of the flue gas purification system, also due to their maintenance cost. Thus, the storability of powders of sodium salts of carbonic acid, in particular of trona or sodium hydrogen carbonate, with a low d₅₀ is difficult.

In addition to their surface area, particles may also contain porosity, normally specified as the specific pore volume of the material. If the pores forming the porosity are accessible from the outside of the particles, this usually also increases the surface area of the particles. Therefore, if the material under investigation has a high specific pore volume, it normally also has a high specific surface area. The opposite, however, is not necessarily the case. For example, fumed silica, sometimes also referred to as pyrogenic silica, is a particulate material with a specific surface area of 50 to 600 m²/g, wherein the particles are non-porous.

Another problem of powders of sodium salts of carbonic acid is their flowability. When stored for example in silos, powders of sodium salts of carbonic acid tend to become denser, presumably by the action of gravity. In this process, the powder loses its flowability, which makes it difficult to take the powder out of the silo. In order to make the powder accessible, it needs to be agitated, for example by pressured air, to restore the flowability of the powder.

Yet another problem observed when grinding sodium salts of carbonic acid, in particular sodium hydrogen carbonate, is caking of the ground material to the grinding equipment, for example to the walls of the mill. This caking effect makes regular maintenance of the mills necessary. Attempts to overcome this caking effect include the addition of stearic acid, calcium stearate, trimethylolpropane, or glycols during grinding, in particular to the sodium hydrogen carbonate. While this helps to reduce the caking effect, the additional additives increase the cost of the process.

In addition to compositions that mostly consist of one absorbent, also mixtures of absorbents are known.

WO 2007031552 A1 describes an absorbent composition for SO₃ containing flue gases, which includes an additive and a sodium absorbent such as mechanically refined trona or sodium hydrogen carbonate. The additive is selected from magnesium carbonate, calcium carbonate, magnesium hydroxide, calcium hydroxide, and mixtures thereof and is present in the mixture in an amount of preferably between 0.1% and 5%, most preferably between 0.5% and 2% by weight of the sodium absorbent.

DE 202 10 008 U1 describes a composition for the purification of flue gases on the basis of quicklime (CaO). The composition may contain additionally calcium hydroxide and sodium hydrogen carbonate. Compositions that mainly contain quicklime are preferred.

US 4 859 438 describes a method for removing harmful substances from flue gases using mixtures of dry absorbents based on hydrated oxides, hydroxides or oxides. The dry absorbents may include sodium hydrogen carbonate and one or more of NH₄HCO₃, Al(OH)₃, silica gel, calcium hydroxide, and salts with water of crystallization such as CaCl₂ or Al₂O₃. With the composition, the removal of the harmful substances from flue gases is reportedly improved.

EP 1 004 345 A2 describes a treatment agent for the removal of acidic components from a gas. The treatment agent contains sodium hydrogen carbonate in an amount of preferably at least 70 wt.% and may contain another component such as potassium hydrogen carbonate, slaked lime, calcium carbonate, zeolite, activated carbon, or silica or diatomaceous earth. In order to prevent agglomeration, the treatment agent may contain silica powder, fumed silica, white carbon, a basic magnesium carbonate, calcium carbonate or diatomaceous earth. The composition of EP 1 004 345 A2 can effectively remove acidic components from flue gas.

The examples of compositions from the prior art mentioned above remain silent about the porosity of the absorbents and/or the beneficial effects resulting therefrom. Despite the progress made maintaining the storability, solutions that help to maintain the particle size distribution, in particular the d₅₀ value of a powder, are desirable. Moreover, absorbent compositions with a good absorptivity towards sulfur oxides and/or hydrogen halides are desirable. Further, compositions with a good flowability, in particular after some storage time, are desirable.

Therefore, it was an object of the present invention to provide a composition that has a good flowability, a good storability, and/or a good absorptivity of pollutants such as sulfur oxides and/or hydrogen halides. In particular, it was an object of the present invention to provide a composition having as high a flowability as possible, in particular after some storage time, and, at the same time, having a good sulfur oxide absorptivity. The combination of a good sulfur oxide absorptivity and as high a flowability as possible is challenging to achieve, because compounds with a good absorptivity towards sulfur oxides, such as for example sodium hydrogen carbonate, are known for their limited flowability, in particular after some storage time.

Some or all of these objects can be achieved by using the present invention. In particular, some or all of these objects can be achieved by the composition of claim 1, the process of claim 10, the composition of claim 15, the process of claim 16, the use of claim 17, and the use of claim 18.

Further embodiments are described in the dependent claims and will be discussed in the following.

The invention provides for a composition for the purification of flue gas, said composition containing, in each case based on the total weight of the composition:
a. 1 to 99 wt.% of a powder of a sodium salt of carbonic acid; and
b. 1 to 99 wt.% of a powder of an absorptive material;
wherein said powder of said absorptive material has a specific pore volume that is equal to or greater than 0.1 cm³/g.

It has surprisingly been found that as a result of the unique combination of 1 to 99 wt.% of a powder of a sodium salt of carbonic acid with 1 to 99 wt.% of a powder of an absorptive material, wherein said powder of said absorptive material has a specific pore volume that is equal to or greater than 0.1 cm³/g, a composition for flue gas purification is obtained that can be stored well and/or has a good flowability and/or a good absorptivity of pollutants such as sulfur oxides and/or hydrogen halides. In particular, it was found that compositions containing a powder of a sodium salt of carbonic acid and a powder of an absorptive material with a specific pore volume that is equal to or greater than 0.1 cm³/g exhibited a significantly improved flowability, in particular compared to pure powders of alkali metals salts of carbonic acid and a good sulfur oxide absorptivity.

Without wishing to be bound by a scientific theory, it appears that the high specific porosity of the powder of the absorptive material aids in storage of the composition and/or in maintaining a good flowability possibly by trapping moisture and/or liquids inside of the absorptive material particles. In this way, an unchanging surface of the particles may be maintained. This may help in preventing aggregation. It may also help in maintaining flowability.

Surprisingly, it has also been found that when using the above composition in flue gas purification, peak concentrations of hydrogen fluoride do not result in a very high consumption of the composition.

Moreover, it was found that using a sodium salt of a carbonic acid was particularly effective at increasing the sulfur oxide absorptivity of the resulting compositions. Compositions containing sodium salts of carbonic acid also turned out to be more cost efficient than compositions containing other alkali metal salts of carbonic acid.

The absorptivity of an absorbent (or an absorbent composition) particularly describes its capability to retain pollutants, in particular sulfur oxides and/or hydrogen halides.

The absorptivity can for example be expressed in absolute terms, that is the absolute amount of pollutant absorbed by the absorbent (or absorbent composition), or in relative terms, that is the amount of pollutant absorbed by the absorbent (or the absorbent composition) with respect to a reference absorbent (or absorbent composition).

The flowability of a loose material, in particular of a powder, relates to its accessibility from a storage container. A good flowability can normally be ascribed to loose materials, in particular powders, that easily flow out of the storage container, for example a silo, due to the action of gravity. In particular, for loose materials with a good flowability, no further flow promoting action on the material is required. Loose materials, in particular powders, that have a propensity to obstruct the flow out of the silo, for example by forming consolidated "bridges" (for example via liquid droplets) between the particles, can normally be said to have a bad flowability. The flowability of a loose material, in particular of a powder, can for example be described using the FFC value. Higher FFC values indicate a better flowability.

Methods to determine the FFC value are known to the skilled person and are also described for example in the article by Dietmar Schulze "Zur Fließfähigkeit von Schüttgütern - Definition und Meßverfahren", published in the journal "Chemie Ingenieur Technik" by Wiley VCH, 1995, Volume 67, Issue 1, pages 60-68, or in "Powders and Bulk Solids - Behavior, Characterization, Storage and Flow" by Dietmar Schulze, Springer-Verlag Berlin Heidelberg, 2008. For example, the FFC value can be determined by a uniaxial compression test. In the uniaxial compression test, normally a hollow cylinder, ideally with frictionless walls, is filled with the loose material, in particular with the powder, to be investigated and a stress S1 - the consolidation stress - is applied in the vertical direction in the first step. The stress S1 may also be called sigma₁, σ₁.Subsequently, the specimen is relieved of the consolidation stress S1, and the hollow cylinder is removed. Then, an increasing vertical compressive stress is applied onto the consolidated cylindrical loose material specimen, in particular the consolidated powder specimen, up to the stress Sc at which the cylindrical specimen breaks (or fails). The stress Sc can be called compressive strength or unconfined yield strength and is sometimes also denoted sigma_{c}, σ_{c}. The failure of the consolidated cylindrical specimen upon application of the stress Sc indicates incipient flow of the consolidated loose material, in particular the consolidated powder. The FFC value can then be determined as the ratio FFC = S1/Sc.

The flowability of a loose material, in particular of a powder, can also be determined using a Jenike shear tester. In this case, the testing method for the determination of the FFC value usually requires the determination of a so-called yield limit or yield locus plot, from which S1 and Sc and, thus, the FFC value, can be determined. The determination of the yield plot is described in the references by Dietmar Schulze mentioned above and normally requires a preshear treatment of the sample (shearing of the sample up to the point of constant shear stress while a first consolidation force is applied) followed by the measurement step (shearing of the sample up to the maximum shear stress at which the particles start to move with respect to each other while a lower consolidation force than in the preshear treatment is applied). For each point in the yield limit plot, a new sample is required that has to be subjected to the same preshear treatment. From the resulting yield limit plot, S1 and Sc and, thus, the FFC value can be determined.

In addition, it is also possible to generally describe and/or determine the flowability using a ring shear tester, for example a ring shear tester of the type RST-XS. In the ring shear tester, the sample (the loose material, in particular the powder) is usually filled into the ring-shaped shear cell of the tester. A lid is normally placed on top of the sample and fixed with a crossbeam. Subsequently, a normal stress S is usually applied to the sample via the lid of the shear cell. During the measurement, the shear cell usually slowly rotates, while the lid and the crossbeam are prevented from rotating by two tie-rods connected from opposite sides to the crossbeam. The bottom of the shear cell and the bottom side of the lid are normally rough such that the rotation of the shear cell induces a shear stress that can be measured via the forces acting on the two tie-rods. The measurement steps are similar to the steps described before, although it is possible to determine an entire yield locus plot with a single sample. From the resulting yield limit plot, S1 and Sc and, thus, the FFC value can then be determined.

According to an embodiment of the invention, the composition contains 1 to 70 wt.%, preferably 1 to 50 wt.% or 1 to 30 wt.% or 5 to 30 wt.% or 10 to 30 wt.% or 13 to 30 wt.% or 13 to 20 wt.% or 13 to 18 wt.%, of the powder of the sodium salt of carbonic acid, based on the total weight of the composition. It has been discovered that compositions with these amounts of the sodium salt of carbonic acid have a particularly good flowability, in particular after some storage time. It was also discovered that in these ranges, the sulfur dioxide absorptivity is improved. Further, it was found that a composition with a particularly well balanced property profile can be achieved if the sodium metal salt of carbonic acid is present in an amount of approximately 10 to 25 wt.%, based on the total weight of the composition.

According to another embodiment of the invention, the composition contains 30 to 99 wt.%, preferably 50 to 99 wt.% or 70 to 99 wt.% or 70 to 95 wt.% or 70 to 90 wt.% or 70 to 87 wt.% or 80 to 87 wt.% or 82 to 87 wt.%, of the powder of the absorptive material, based on the total weight of the composition. It has been discovered that compositions with these amounts of the absorptive material have a particularly good flowability. It was found that a composition with a particularly well balanced property profile can be achieved if the absorptive material is present in an amount of approximately 75 to 90 wt.%, based on the total weight of the composition.

The particles of the powder of the sodium salt of carbonic acid may have various sizes. It is advantageous though, if the particles are small. Thus, according to another embodiment of the invention, the powder of the sodium salt of carbonic acid has a particle size d₅₀ of less than 40 µm, in particular less than 35 µm or less than 30 µm less than 25 µm or less than 20 µm or less than 15 µm or less than 12 µm. It is particularly preferred that the powder of the sodium salt of carbonic acid has a particle size d₅₀ of less than 20 µm, more preferably less than 15 µm or less than 12 µm. It was found that powders of sodium salts of carbonic acid with particles sizes as mentioned before absorb pollutants more efficiently.

For the purpose of obtaining an efficient composition for the purification of flue gases, different sodium salts of carbonic acid can be used. Preferably, the sodium salt of carbonic acid is selected from the group consisting of sodium hydrogen carbonate, sodium carbonate, sodium sesquicarbonate, and mixtures thereof. Even more preferably, the sodium salt of carbonic acid is sodium hydrogen carbonate and/or sodium sesquicarbonate. It has been found that with the aforementioned sodium salts of carbonic acid, the absorptivity, in particular the sulfur dioxide absorptivity, is very good.

Sodium sesquicarbonate can, for example, be used in the form of trona that can be directly mined. The mined trona can thereby be used with or without further refining. Sodium hydrogen carbonate can, for example, be used in the form of mined nahcolite and/or as the product of a chemical process. The mined nahcolite can thereby be used with or without further refining.

Mined trona may contain impurities such as shortite, dolomitic shale, quartz, illite, calcite, feldspars, and/or sodium fluoride. Mined trona may contain up to 20 wt.%, preferably up to 15 wt.%, more preferably up to 10 wt.%, more preferably up to 5 wt.%, more preferably up to 3 wt.% of the aforementioned impurities, based on the total weight of the trona.

The composition according to the invention may contain different materials as absorptive material. Preferably, the absorptive material is an absorbent for sulfur oxides, in particular sulfur dioxide, and/or an absorptive material for hydrogen halide, in particular hydrogen chloride and/or hydrogen fluoride.

The materials contained as absorptive material in the composition according to the invention can be advantageously calcium-containing materials, materials containing calcium and magnesium, and/or magnesium-containing materials. Examples for calcium-containing materials include limestone, quicklime, and hydrated lime. Examples for materials containing calcium and magnesium include dolomite, dolomitic quicklime, and dolomitic hydrated lime. Examples for magnesium-containing materials include magnesium carbonate, magnesium oxide, and magnesium hydroxide.

Preferably, the absorptive material contained as a powder in the composition according to the invention is selected from the group consisting of limestone, quicklime, hydrated lime, dolomite, dolomitic quicklime, dolomitic hydrated lime, magnesium carbonate, magnesium oxide, magnesium hydroxide, and mixtures thereof. More preferably, the absorptive material contained as a powder in the composition according to the invention is selected from the group consisting of quicklime, hydrated lime, dolomitic quicklime, dolomitic hydrated lime, magnesium oxide, magnesium hydroxide, and mixtures thereof. Most preferably, the absorptive material contained as a powder in the composition according to the invention is hydrated lime.

Use of the aforementioned materials alone or as a combination has shown to be beneficial in particular for the flowability of the resulting composition and/or for the absorptivity of the composition, in particular for the HF absorptivity. These beneficial effects were especially pronounced for hydrated lime as absorptive material.

The hydrated lime used according to the invention is also known as slaked lime and mainly contains Ca(OH)₂. Preferably, the hydrated lime of the invention contains more than 90 wt.%, more preferably more than 93 wt.%, more preferably more than 95 wt.%, more preferably more than 97 wt.%, more preferably more than 99 wt.%, Ca(OH)₂, based on the weight of the hydrated lime in the composition. In addition to the Ca(OH)₂, the hydrated lime may contain impurities, in particular impurities derived from SiO₂, Al₂O, Al₂O₃, iron oxides such as Fe₂O₃, MgO, MnO, P₂O₅, K₂O, CaSO₄, and/or SO₃. Preferably, the hydrated lime according to the invention contains less than 10 wt.%, more preferably less than 7 wt.%, more preferably less than 5 wt.%, more preferably less than 3 wt.%, more preferably less than 1 wt.% of the impurities listed above, based on the weight of the hydrated lime in the composition.

Similarly, the calcium-containing materials, in particular the limestone and the quicklime, the materials containing calcium and magnesium, in particular the dolomite, dolomitic quicklime, and dolomitic hydrated lime, and the magnesium-containing materials, in particular the magnesium carbonate, magnesium oxide, and magnesium hydroxide, may contain the impurities mentioned above in the amounts mentioned above.

In addition to the impurities of hydrated lime mentioned above, the hydrated lime according to the invention may also contain calcium-containing impurities, in particular CaO and/or CaCO₃. The calcium oxide impurities in the hydrated lime may originate from an insufficient hydration of the quicklime starting material. The calcium carbonate impurities in the hydrated lime may originate from either the initial limestone from which the hydrated lime according to the invention is derived or from a partial carbonation reaction of the hydrated lime with air. The content of calcium oxide in the hydrated lime according to the invention is preferably less than 5 wt.%, more preferably less than 3 wt.%, more preferably less than 2 wt.%, more preferably less than 1 wt.%, based on the weight of the hydrated lime in the composition. The content of calcium carbonate in the hydrated lime according to the invention is preferably less than 15 wt.%, more preferably less than 10 wt.%, more preferably less than 6 wt.%, more preferably less than 4 wt.%, based on the weight of the hydrated lime in the composition.

The size of the absorptive material particles in the composition, in particular the d₅₀ value of the absorptive material, should be small. Preferably, the absorptive material has a particle size d₅₀ of less than 50 µm, more preferably less than 40 µm, or less than 30 µm, or less than 20 µm, or less than 10 µm. Optimum results have been obtained when as the absorptive material in the composition, hydrated lime that has a particle size d₅₀ of less than 50 µm, preferably less than 40 µm, or less than 30 µm, or less than 20 µm, or less than 10 µm, was used. As the absorptive material in the composition, a hydrated lime with a d₅₀ value of less than 10 µm is particularly preferred.

The d₅₀ value of the particles of a powder may for example be determined by determining the particle size distribution of the powder. The size at which 50 wt.% of the powder would pass a theoretical aperture of a sieve, as determined from the particle size distribution, is commonly referred to as the d₅₀ value. Different methods for the determination of the particle size distribution are known to the skilled person. For example, the particle size distribution may be determined by sieving experiments. For example, the particle size distribution may also be determined by laser diffraction, in particular according to ISO 13320:2009. In the determination of the particle size distribution of a powder by laser diffraction, the powder to be investigated may be suspended in a liquid medium, for example in ethanol, and the suspension may be subjected to an ultrasound treatment, for example for 120 seconds, followed by a pause, for example of 120 seconds. The suspension may also be stirred, for example at 70 rpm. The particle size distribution may then be determined by plotting the measurement results, in particular the cumulative sum of the percentage by mass of the particle sizes measured against the particle sizes measured. The d₅₀ value can then be determined from the particle size distribution. For the determination of the particle size distribution and/or the d₅₀ value of a powder by laser diffraction, a particle size analyzer Helos available from the company Sympatec using the additional Sucell dispersing equipment may for example be employed.

It has also been found to be advantageous if the absorptive material has a high surface area. A composition containing an absorptive material with a surface area that is equal to or greater than 20 m²/g, preferably equal to or greater than 30 m²/g, or equal to or greater than 40 m²/g, or equal to or greater than 45 m²/g, was found to be particularly efficient at flue gas purification. Optimum results have been obtained particularly in flue gas purification when as the absorptive material in the composition, hydrated lime that has a surface area that is equal to or greater than 20 m²/g, preferably equal to or greater than 30 m²/g, or equal to or greater than 40 m²/g, or equal to or greater than 45 m²/g, was used.

The surface area of the materials described herein, in particular of the absorptive materials, particularly refers to the specific surface area, more particularly, to the BET (Brunauer, Emmet, Teller) specific surface area. Methods to determine the specific surface area of a material are known to the skilled person. For example, the specific surface area may be determined by nitrogen adsorption measurements of a preferably dried and evacuated sample at 77 K, according to the BET multipoint method. For this purpose, for example, a device of the type Micromeritics ASAP 2010 may be used. In particular, the BET specific surface area may be determined according to DIN ISO 9277, in particular according to DIN ISO 9277:2014-01, particularly using the static volumetric determination method and particularly the multipoint analysis method.

Also the specific pore volume of the absorptive material is preferably high. This is particularly useful to obtain compositions that have a good flowability. Additionally, it is beneficial for the absorptivity of the composition. Accordingly, the composition contains preferably an absorptive material that has a specific pore volume that is equal to or greater than 0.15 cm³/g, or equal to or greater than 0.2 cm³/g. Optimum results have been obtained when as the absorptive material in the composition, hydrated lime that has a specific pore volume that is equal to or greater than 0.15 cm³/g, or equal to or greater than 0.2 cm³/g, was used.

The specific pore volume described herein particularly refers to the total specific pore volume, preferably of pores with a diameter of less than 100 nm, determined by BJH (Barrett, Joyner, Halenda), that is, assuming cylindrical pore geometry. Advantageously, the specific pore volume of the absorptive material, particularly the specific pore volume determined according to BJH, may comprise more than 50 vol.%, preferably more than 55 vol.%, more preferably more than 60 vol.%, based on the total pore volume, of the partial pore volume of pores with a diameter of 10 to 40 nm determined according to BJH. Methods to determine the specific pore volume of a material are known to the skilled person. For example, the specific pore volume can be determined by nitrogen desorption measurements of a preferably dried and evacuated sample at 77 K. The data obtained in this way can preferably be analyzed according to the BJH method, that is, assuming cylindrical pore geometry. For this purpose, for example, a device of the type Micromeritics ASAP 2010 may be used. In particular, the specific pore volume determined according to BJH may be determined according to DIN 66134, in particular according to DIN 66134:1998-02, particularly using the volumetric determination method.

Processes for the manufacture of a hydrated lime that may be employed in the present invention are known to the person skilled in the art. For example, WO 97/14650 A1 describes processes for the manufacture of hydrated lime that may be employed in the present invention.

According to another embodiment of the invention, the composition contains clay and/or active carbon and/or zeolites in an amount of up to 30 wt.%, based on the total weight of the composition. This helps particularly in obtaining a composition that is effective in flue gas purification, particularly for flue gases that also contain heavy metals and/or organic pollutants such as dioxins.

In addition to the composition, the invention also provides for processes for the manufacture of the composition for flue gas purification.

The processes for the manufacture of the composition for flue gas purification according to the invention basically comprise the following steps:
a. providing a composition containing, in each case based on the total weight of the composition:
   - 1 to 99 wt.% of a powder of a sodium salt of carbonic acid, and
   - 1 to 99 wt.% of a powder of an absorptive material; and
b. applying mechanical and/or thermal energy to the composition;
wherein said powder of said absorptive material has a specific pore volume that is equal to or greater than 0.1 cm³/g.

The steps can be performed in any desired order. Preferably, the steps are performed in the order shown above.

According to an embodiment of the manufacturing process of the invention, the composition in step a. contains 1 to 70 wt.%, preferably 1 to 50 wt.% or 1 to 30 wt.% or 5 to 30 wt.% or 10 to 30 wt.% or 13 to 30 wt.% or 13 to 20 wt.% or 13 to 18 wt.%, of the powder of the sodium salt of carbonic acid, based on the total weight of the composition.

According to another embodiment of the manufacturing process of the invention, the composition in step a. contains 30 to 99 wt.%, preferably 50 to 99 wt.% or 70 to 99 wt.% or 70 to 95 wt.% or 70 to 90 wt.% or 70 to 87 wt.% or 80 to 87 wt.% or 82 to 87 wt.%, of the powder of the absorptive material, based on the total weight of the composition.

For the sodium salt of carbonic acid and/or for the absorptive material of the manufacturing method according to the invention, the above provisions concerning the sodium salt of carbonic acid and/or concerning the absorptive material, respectively, shall apply. In particular, the provisions concerning the particle size and/or the type of material used for the sodium salt of carbonic acid and/or the provisions concerning the type of material used for the absorptive material, the particle size, the surface area, and/or the pore volume of the absorptive material as described above shall apply.

According to an embodiment of the manufacturing process according to the invention, thermal and/or mechanical energy is applied to the powder of a sodium salt of carbonic acid and/or to said powder of an absorptive material. This provides more flexibility in the preparation of the composition according to the invention.

Thermal energy can for example be applied by heating the powders and/or compositions for example by heating, for example in an oven, or by irradiating with a proper irradiation source such as a radiant heater.

Mechanical energy can be applied to the powders and/or compositions in different forms. For example, mechanical energy can be applied by crushing, grinding, and/or milling. For this purpose, appropriate devices such as ball mills, jet mills, edge mills, pin mills, or roller mills can advantageously be used. However, mechanical energy can also be applied to the powders and/or the compositions by mixing the powders and/or the compositions using a mixer. Appropriate mixers may include ploughshare mixers, rotor mixers, paddle mixers, ribbon blenders, jet mixers, and/or screw blenders. The application of mechanical energy may also comprise several steps, for example at first a crushing, grinding, and/or milling step and a second mixing step.

According to another embodiment of the manufacturing process according to the invention, step b. comprises a mixing and/or grinding step. In this way, caking of the sodium salt of carbonic acid to the grinding equipment can be minimized. Moreover, a very homogeneous composition may be obtained.

Optimum results have been obtained in the manufacturing process according to the invention when step b. comprises a grinding step in which the composition is ground to a particle size d₅₀ of equal to or less than 40 µm, in particular less than 35 µm, or less than 30 µm, or less than 25 µm, or less than 20 µm, or less than 15 µm, or less than 12 µm. This can directly provide a usable composition that can also be stored. It may also help in reducing caking of the mill charge to the milling equipment.

In addition, the invention also provides for a process for the purification of flue gas. In the process for the purification of flue gas according to the invention, the flue gas is brought into contact with the composition according to the invention.

The composition according to the invention can be used for different purposes. Ideally, the composition according to the invention is used for the purification of flue gas, preferably for the purification of HF containing flue gas.

In addition, the invention provides for the use of a powder of an absorptive material having a specific pore volume that is equal to or greater than 0.1 cm³/g, to improve the flowability, in particular after some storage time, and/or storability and/or HF absorptivity of a powder of a sodium salt of carbonic acid having a particle size d₅₀ of less than 40 µm. Preferably, the sodium salt of carbonic acid is sodium hydrogen carbonate and/or sodium sesquicarbonate.

According to an embodiment of the use of the powder of an absorptive material according to the invention, the powder of the absorptive material is used in an amount of 1 to 99 wt.%, in particular 30 to 99 wt.% or 50 to 99 wt.% or 70 to 99 wt.% or 70 to 95 wt.% or 70 to 90 wt.% or 70 to 87 wt.% or 80 to 87 wt.% or 82 to 87 wt.%, based on the total weight of the composition.

For the absorptive material for the use of the powder of an absorptive material according to the invention, the above provisions concerning the absorptive material shall apply. In particular, the provisions concerning the type of material used for the absorptive material, the particle size, the surface area, and/or the pore volume of the absorptive material as described above shall apply.
- Figure 1: shows the relative SO₂ absorption (called SO₂ abatement) in % versus the fraction of milled sodium hydrogen carbonate for different absorbent compositions with different sodium hydrogen carbonate and hydrated lime contents.
- Figure 2: shows the dependency of the FFC value of fresh samples of absorbent compositions and of 18 hour old samples of absorbent compositions for different fractions of sodium hydrogen carbonate and hydrated lime, respectively.

In the following, the invention shall be further explained by examples that are illustrative only and not to be construed as limiting in any way.

### Materials used

Sodium hydrogen carbonate, NaHCO₃, (Bicar, Solvay); hydrated lime Ca(OH)₂, (Sorbacal SP, Lhoist). The Sorbacal SP had a BET specific surface area of about 40 m²/g, a specific BJH pore volume of about 0.2 cm³/g, and a particle size d₅₀ of about 6 µm.

### Example 1: Preparation of compositions for flue gas purification

Sodium hydrogen carbonate was milled using a pin mill to a powder with a d₅₀ value of 28.9 µm as determined by laser light scattering in ethanol suspension using a Helos particle analyzer from Sympatec. The particle size analyzer had a Sucell equipment, the sample was subjected to ultrasound treatment for 120 seconds with a pause of 120 seconds and the suspension was stirred at 70 rpm. The milled sodium hydrogen carbonate was subsequently mixed homogeneously with hydrated lime at the ratios shown in Table 1 to obtain compositions for flue gas purification. Mixing of the powders was carried out using a rotor mixer.

**Table 1: Ratios of the compositions for flue gas purification**

| Composition number | Amount of NaHCO₃ [wt.%] | Amount of Ca(OH)₂ [wt.%] |
|---|---|---|
| **1** | 5 | 95 |
| **2** | 10 | 90 |
| **3** | 25 | 75 |
| **4** | 50 | 50 |
| **5** | 75 | 25 |

### Example 2: Determination of the SO₂ absorptivity.

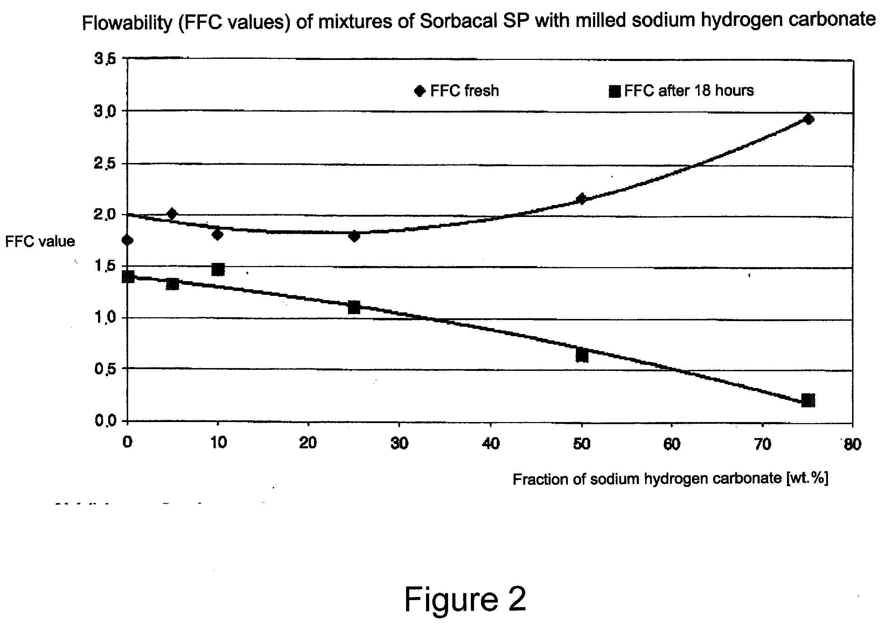

The SO₂ absorptivities of compositions **3**,**4**, and **5** were determined in a flue gas treatment pilot plant that is principally described in WO 2007/000433 A2, pages 10 to 12 and Figure 2 therein. The compositions were injected in co-current flow to purify a model flue gas with the following gas conditions:
temperature 220 °C,
SO₂ inlet concentration 1500 mg/Nm³,
H₂O content 10%,
CO₂ concentration 9%,
average stoichiometric ratio of absorbent composition to SO₂ (expressed versus the inlet) of 2.5.

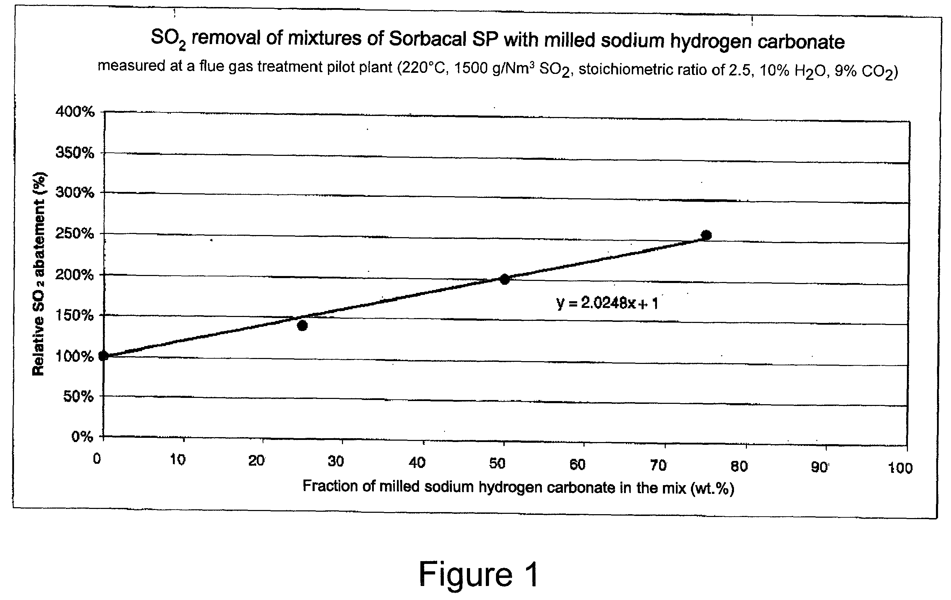

The results of the SO₂ absorption tests are compiled in Table 2 and displayed in Figure 1 together with the results for pure hydrated lime as a comparative example.

**Table 2:**

| Composition | NaHCO₃ content [wt.%] | Absolute SO₂ absorptivity [% abs.] | SO₂ absorptivity relative to 100% Ca(OH)₂ [% rel.] |
|---|---|---|---|
| 100% Ca(OH)₂ (comparative) | 0 | 23 | 100 |
| **3** | 25 | 32 | 139 |
| **4** | 50 | 46 | 200 |
| **5** | 75 | 59 | 257 |

During the test, no blockage or abnormal clogging of the dosing equipment were observed. Thus, the dosing device was not affected by the presence of milled sodium hydrogen carbonate. This may indicate the beneficial effect of the hydrated lime on the milled sodium hydrogen carbonate.

Moreover, the SO₂ absorptivity of compositions **3, 4** and **5** was significantly higher than for the pure hydrated lime.

### Example 3: Flowability of the compositions

The flowability of the compositions **1** to **5** and of pure hydrated lime as a comparative example were investigated by determining their FFC values using an RST-XS ring shear tester. The results are displayed in Figure 2, using diamonds for the FFC values of samples of the freshly prepared composition and using squares for the FFC values of samples measured 18 hours after preparation of the compositions.

From Figure 2, the beneficial effect of the admixture of hydrated lime to sodium hydrogen carbonate powder on the flowability after some storage time can be seen. For freshly prepared compositions, the FFC value of compositions with a low amount of hydrated lime was higher than for compositions with a high amount of hydrated lime. After 18 hours, however, the FFC of compositions with a low amount of hydrated lime was lower than for composition with a high amount of hydrated lime. In particular, an FFC value of more than 1 was maintained even after 18 hours for compositions containing more than 70 wt.% hydrated lime. Moreover, the decrease in the FFC value was greater for compositions **4** and **5** containing 50 wt.% and 25 wt.% hydrated lime, respectively, than for compositions **1** to **3** containing 95 wt.%, 90 wt.%, and 75 wt.% hydrated lime, respectively. This indicates that the decrease in flowability over time depends on the ratio of hydrated lime: sodium hydrogen carbonate. A particularly well balanced property profile with FFC values of approximately 1 or greater and an improved sulfur dioxide absorptivity was achieved if sodium hydrogen carbonate was present in an amount of approximately 10 to 25 wt.%. As already mentioned, higher FFC values indicate a better flowability.

Importantly, it was also observed that compositions containing more than 25 wt.% hydrated lime could at least be temporarily stored without exhibiting the disadvantageous handling properties of pure ground sodium hydrogen carbonate.

## Claims

1. A composition for the purification of flue gas, said composition containing, in each case based on the total weight of the composition:
a. 1 to 99 wt.% of a powder of a sodium salt of carbonic acid; and
b. 1 to 99 wt.% of a powder of an absorptive material;
wherein said powder of said absorptive material has a specific pore volume that is equal to or greater than 0.1 cm³/g.

2. The composition according to claim 1, wherein said composition contains 1 to 70 wt.%, in particular 1 to 50 wt.% or 1 to 30 wt.% or 5 to 30 wt.% or 10 to 30 wt.% or 13 to 30 wt.% or 13 to 20 wt.% or 13 to 18 wt.%, of said powder of said sodium salt of carbonic acid, based on the total weight of the composition, and/or wherein said composition contains 30 to 99 wt.%, in particular 50 to 99 wt.% or 70 to 99 wt.% or 70 to 95 wt.% or 70 to 90 wt.% or 70 to 87 wt.% or 80 to 87 wt.% or 82 to 87 wt.%, of said powder of said absorptive material, based on the total weight of the composition.

3. The composition according to claim 1 or claim 2, wherein said powder of said sodium salt of carbonic acid has a particle size d₅₀ of less than 40 µm, in particular less than 35 µm or less than 30 µm or less than 25 µm or less than 20 µm or less than 15 µm or less than 12 µm.

4. The composition according to any one of the preceding claims, wherein said sodium salt of carbonic acid is selected from the group consisting of sodium hydrogen carbonate, sodium carbonate, sodium sesquicarbonate, and mixtures thereof.

5. The composition according to any one of the preceding claims, wherein said sodium salt of carbonic acid is sodium hydrogen carbonate and/or sodium sesquicarbonate.

6. The composition according to any one of the preceding claims, wherein said absorptive material is selected from the group consisting of limestone, quicklime, hydrated lime, dolomite, dolomitic quicklime, dolomitic hydrated lime, magnesium carbonate, magnesium oxide, magnesium hydroxide, and mixtures thereof.

7. The composition according to any one of the preceding claims, wherein said absorptive material is hydrated lime.

8. The composition according to claim 7, wherein said hydrated lime has a particle size d₅₀ of less than 50 µm, in particular less than 40 µm, or less than 30 µm, or less than 20 µm, or less than 10 µm; and/or wherein said hydrated lime has a surface area that is equal to or greater than 20 m²/g, in particular equal to or greater than 30 m²/g, or equal to or greater than 40 m²/g, or equal to or greater than 45 m²/g; and/or wherein said hydrated lime has a specific pore volume that is equal to or greater than 0.15 cm³/g, or equal to or greater than 0.2 cm³/g.

9. The composition according to any one of the preceding claims, wherein the composition contains clay and/or active carbon and/or zeolites in an amount of up to 30 wt.%, based on the total weight of the composition.

10. A process for the manufacture of a composition for the purification of flue gas according to any one of claims 1 to 9, comprising:
a. providing a composition containing, in each case based on the total weight of the composition:
- 1 to 99 wt.% of a powder of a sodium salt of carbonic acid, and
- 1 to 99 wt.% of a powder of an absorptive material; and
b. applying mechanical and/or thermal energy to the composition;
wherein said powder of said absorptive material has a specific pore volume that is equal to or greater than 0.1 cm³/g.

11. The process of claim 10, wherein the composition in step a. contains 1 to 70 wt.%, in particular 1 to 50 wt.% or 1 to 30 wt.% or 5 to 30 wt.% or 10 to 30 wt.% or 13 to 30 wt.% or 13 to 20 wt.% or 13 to 18 wt.%, of said powder of said sodium salt of carbonic acid, based on the total weight of the composition; and/or wherein the composition in step a. contains 30 to 99 wt.%, in particular 50 to 99 wt.% or 70 to 99 wt.% or 70 to 95 wt.% or 70 to 90 wt.% or 70 to 87 wt.% or 80 to 87 wt.% or 82 to 87 wt.%, of said powder of said absorptive material, based on the total weight of the composition.

12. The process according to any one of claims 10 or 11, wherein said sodium salt of carbonic acid is as defined in any one of claims 3 to 5 and/or said powder of said absorptive material is as defined in any one of claims 6 to 8.

13. The process according to any of claims 10 to 12, wherein thermal and/or mechanical energy is applied to said powder of a sodium salt of carbonic acid and/or to said powder of an absorptive material.

14. The process according to any one of claims 10 to 13, wherein step b. comprises a mixing and/or grinding step, and, optionally, wherein, in the grinding step, the composition is ground to a particle size d₅₀ of equal to or less than 40 µm, in particular less than 35 µm or less than 30 µm or less than 25 µm or less than 20 µm or less than 15 µm or less than 12 µm.

15. A composition for the purification of a flue gas obtainable by the process according to any one of claims 10 to 14.

16. A process for the purification of flue gas, wherein the flue gas is brought into contact with a composition according to any one of claims 1 to 9 or 15.

17. Use of a composition according to any one of claims 1 to 9 or 15 for the purification of flue gas, in particular for HF containing flue gas.

18. Use of a powder of an absorptive material having a specific pore volume that is equal to or greater than 0.1 cm³/g, to improve the flowability, in particular after some storage time, and/or storability and/or HF absorptivity of a powder of a sodium salt of carbonic acid having a particle size d₅₀ of less than 40 µm.

19. Use according to claim 18, wherein said powder of said absorptive material is used in an amount of 1 to 99 wt.%, in particular 30 to 99 wt.% or 50 to 99 wt.% or 70 to 99 wt.% or 70 to 95 wt.% or 70 to 90 wt.% or 70 to 87 wt.% or 80 to 87 wt.% or 82 to 87 wt.%, based on the total weight of the composition; and/or wherein said powder of said absorptive material is as defined in any one of claims 6 to 8; and/or wherein said sodium salt of carbonic acid is sodium hydrogen carbonate and/or sodium sesquicarbonate.
